# EUROPEAN PATENT APPLICATION

(11) **EP 4 564 501 A2**
(43) Date of publication of application: **04.06.2025**
(21) Application number: 24213605.9
(22) Date of filing: 18.11.2024
(51) Int. Cl.: H01M 10/04, H01M 10/42, H01M 10/48, H01M 50/107, H01M 50/152, H01M 10/0587, H01M 10/0525

(54) **CYLINDRICAL LITHIUM-ION BATTERY**

(30) Priority: 23.11.2023 CN 202323178655 U
(71) Applicant: Zhongshan Pnas Energy Technology Co., Ltd, Zhongshan Guangdong (CN)
(72) Inventor: ZHU, Naijing, Zhongshan (CN); YAN, Chushu, Zhongshan (CN); HE, Shaobin, Zhongshan (CN)
(74) Representative: Zaboliene, Reda

(57) **Abstract**

Disclosed is a cylindrical lithium-ion battery, comprising a battery cell, a protection board, a first elastic conductive member, a second elastic conductive member and a fixing cap. The protection board is installed above the battery cell at intervals, a top surface of the protection board is provided with a metal contact. An upper end of the first elastic conductive member abuts against a bottom surface of the protection board and is electrically connected to a positive electrode of the protection board, and a lower end of the first elastic conductive member abuts against a top end of the battery cell and is electrically connected to a positive electrode of the battery cell. An upper end of the second elastic conductive member abuts against the bottom surface of the protection board and is electrically connected to a negative electrode of the protection board.

## Description

### TECHNICAL FIELD

The present disclosure relates to the technical field of batteries, in particular to a cylindrical lithium-ion battery.

### BACKGROUND

Due to their high energy density, cylindrical lithium-ion batteries are prone to damage under conditions such as overcharging, over-discharging, overcurrent, short-circuiting, as well as charging and discharging at excessively high temperatures or using at excessively low temperatures. Therefore, existing lithium-ion batteries are equipped with battery protection boards to protect the battery cells within the batteries.

Currently, the battery cells and protection boards of cylindrical lithium-ion batteries on the market are typically connected using nickel strips. Nickel tabs are first spot-welded to the positive and negative electrodes of the protection board, respectively. Then, two nickel strips are spot-welded to the two nickel tabs, with one end of the nickel strip on the positive side of the protection board being spot-welded to the positive electrode of the battery cell, and the other end of the nickel strip on the negative side being spot-welded to the negative electrode of the battery cell. After connecting the protection board and the battery cell with nickel strips, a fixing cap is placed over them to secure the protection board on top of the battery cell. This entire process requires multiple spot-welding steps, leading to a more complex manufacturing process and higher labor costs.

### SUMMARY

The present disclosure aims to solve at least one of the technical problems existing in the prior art. To this end, the present disclosure proposes a cylindrical lithium-ion battery, which can simplify the battery assembly process and make it more convenient.

A cylindrical lithium-ion battery according to an embodiment of the present disclosure, comprising: a battery cell; a protection board, wherein the protection board is installed above the battery cell at intervals, a top surface of the protection board is provided with a metal contact protruding upwards; a first elastic conductive member, wherein an upper end of the first elastic conductive member abuts against a bottom surface of the protection board and is electrically connected to a positive electrode of the protection board, and a lower end of the first elastic conductive member abuts against a top end of the battery cell and is electrically connected to a positive electrode of the battery cell; a second elastic conductive member, wherein an upper end of the second elastic conductive member abuts against the bottom surface of the protection board and is electrically connected to a negative electrode of the protection board, and a lower end of the second elastic conductive member abuts against a top surface of the battery cell and is electrically connected to a negative electrode of the battery cell; and a fixing cap, wherein the fixing cap is sleeved on a periphery of the battery cell, an inner top wall of the fixing cap abuts against the top surface of the protection board and is located on a periphery of the metal contact.

The cylindrical lithium-ion battery according to the embodiment of the present disclosure has at least the following beneficial effects:

By using the first elastic conductive member and the second elastic conductive member, one end of each of the first elastic conductive member and the second elastic conductive member abuts against the bottom surface of the protection board, and the other end abuts against the top surface of the battery cell, so that the upper end of the first elastic conductive member is electrically connected to the positive electrode of the protection board, the lower end of the first elastic conductive member is electrically connected to the positive electrode of the battery cell, the upper end of the second elastic conductive member is electrically connected to the negative electrode of the protection board, the lower end of the second elastic conductive member is electrically connected to the negative electrode of the battery cell, and then the fixing cap is sleeved, so that the inner top wall of the fixing cap abuts against the top surface of the protection board, thereby completing the assembly of the cylindrical lithium-ion battery. The entire process eliminates the traditional connection structure of nickel tabs and nickel strips, reducing the need for multiple manual spot welding processes, thereby simplifying the battery assembly process and making it more convenient.

According to some embodiments of the present disclosure, the upper end of the first elastic conductive member and the upper end of the second elastic conductive member are both attached to the bottom surface of the protection board.

According to some embodiments of the present disclosure, the first elastic conductive member and the second elastic conductive member are both compression springs.

According to some embodiments of the present disclosure, a first insulating support is arranged between the protection board and the battery cell.

According to some embodiments of the present disclosure, the first insulating support is provided with two first clearance grooves, the first elastic conductive member penetrates through one of the first clearance grooves, and the second elastic conductive member penetrates through another first clearance groove.

According to some embodiments of the present disclosure, a second insulating support is arranged between the protection board and the fixing cap, the inner top wall of the fixing cap abuts against the top surface of the protection board via the second insulating support, the second insulating support is provided with a second clearance groove, and the metal contact penetrates through the second clearance groove.

According to some embodiments of the present disclosure, an upper end of the battery cell is inserted into the fixing cap and is in interference fit with the fixing cap.

According to some embodiments of the present disclosure, the cylindrical lithium-ion battery further comprises an outer film, the outer film covers a periphery of the battery cell and the fixing cap, the outer film is provided with an annular top wall and an annular bottom wall, the annular top wall is attached to an outer top wall of the fixing cap, and the annular bottom wall is attached to a bottom wall of the battery cell.

According to some embodiments of the present disclosure, the cylindrical lithium-ion battery further comprises a charging interface, the charging interface is installed on the protection board and is electrically connected to the protection board, and a side wall of the fixing cap is provided with a clearance hole for allowing the charging interface to be in position.

According to some embodiments of the present disclosure, a charging indicator light electrically connected to the charging interface is installed on the protection board.

Additional aspects and advantages of the present disclosure will be partially given in the following description, partially become apparent from the description, or be learned through the practice of the present disclosure.

### BRIEF DESCRIPTION OF THE DRAWINGS

The aforementioned and/or additional aspects and advantages of the present disclosure will become apparent and easily understandable from the description of the embodiments in conjunction with the accompanying drawings below, wherein:
Fig. 1 is a schematic diagram of a cylindrical lithium-ion battery according to an embodiment of the present disclosure;
Fig. 2 is a schematic cross-sectional view of a cylindrical lithium-ion battery according to an embodiment of the present disclosure;
Fig. 3 is a schematic exploded view of a cylindrical lithium-ion battery according to an embodiment of the present disclosure;
Fig. 4 is a schematic structural diagram of a protection board according to an embodiment of the present disclosure;
Fig. 5 is another schematic structural diagram of a protection board according to an embodiment of the present disclosure;
Fig. 6 is a schematic structural diagram of a first insulating support according to an embodiment of the present disclosure;
Fig. 7 is a schematic structural diagram of a second insulating support according to an embodiment of the present disclosure.

The reference signs are as follows:
battery cell 100;
protection board 200, metal contact 210, first positioning groove 220, second positioning groove 230, charging interface 240, and charging indicator light 250;
first elastic conductive member 300, and second elastic conductive member 310;
first insulating support 400, first clearance groove 401, first positioning column 402, placement groove 403, second insulating support 410, second clearance groove 411, and second positioning column 412;
fixing cap 500, and clearance hole 510; and
outer film 600, annular top wall 610, and annular bottom wall 620.

### DETAILED DESCRIPTION OF THE EMBODIMENTS

The following is a detailed description of the embodiments of the present disclosure, with examples of such embodiments shown in the accompanying drawings. Throughout the drawings, identical or similar reference numerals designate identical or similar elements or elements with identical or similar functions. The embodiments described with reference to the drawings are exemplary and are intended solely for explaining the present disclosure, and should not be construed as limiting the present disclosure.

In the description of the present disclosure, it should be understood that references to directions, such as upper, lower, front, rear, left, right, etc., indicate directional or positional relationships based on the drawings, and are merely for the convenience of describing and simplifying the description of the present disclosure. They do not indicate or imply that the device or element referred to must have a specific orientation, be constructed or operated in a specific orientation, and therefore should not be construed as limiting the present disclosure.

In the description of the present disclosure, "a plurality of" means one or more, "multiple" means more than two, "greater than,""less than,""exceeding," etc., are understood to exclude the number itself, while "above,""below,""within," etc., are understood to include the number itself. When "first" and "second" are described, they are used only to distinguish technical features and do not indicate or imply relative importance or implicitly specify the number of technical features indicated or the sequence of technical features.

In the description of the present disclosure, unless otherwise explicitly limited, words such as "provided with", "install", and "connect" should be understood in a broad sense. Those skilled in the art can reasonably determine the specific meaning of the above words in the present disclosure in combination with the specific content of the technical solution.

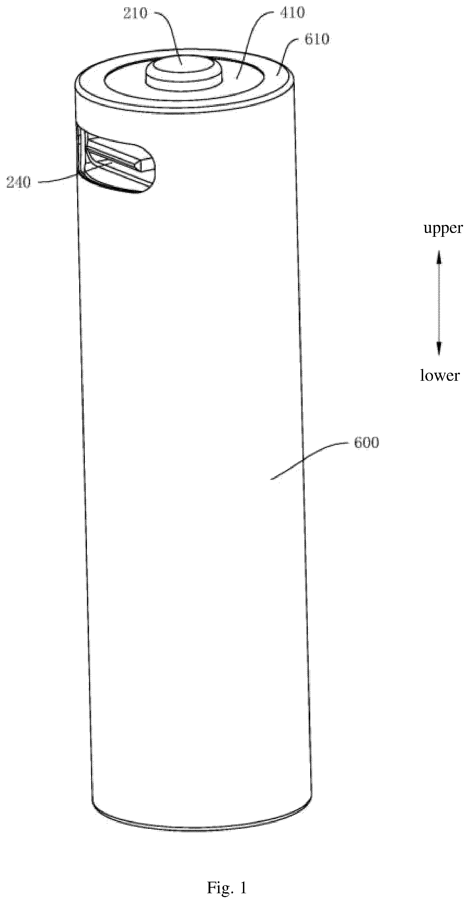

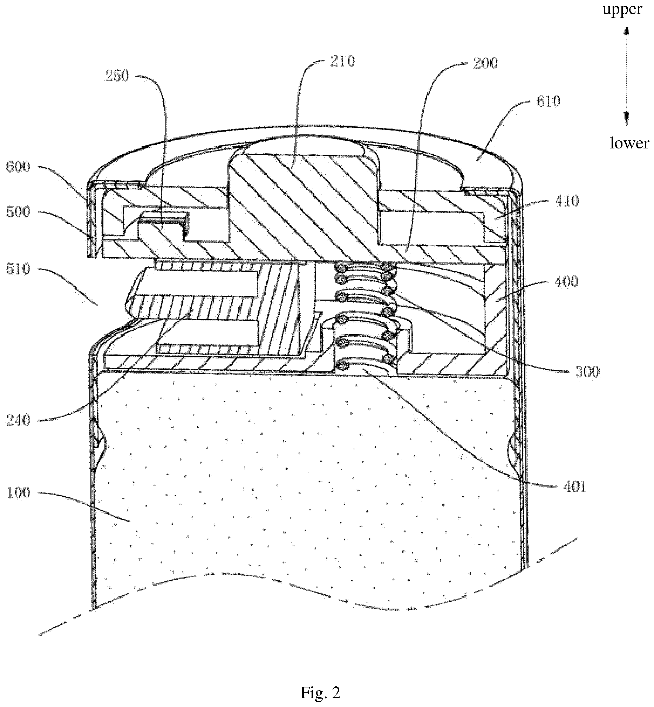

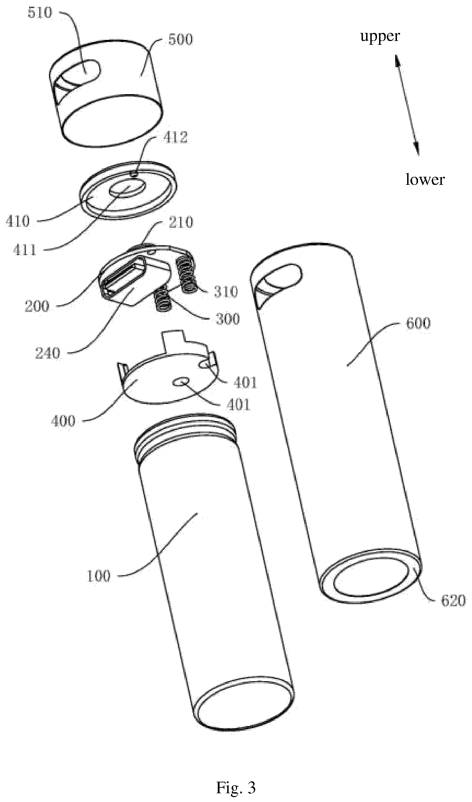

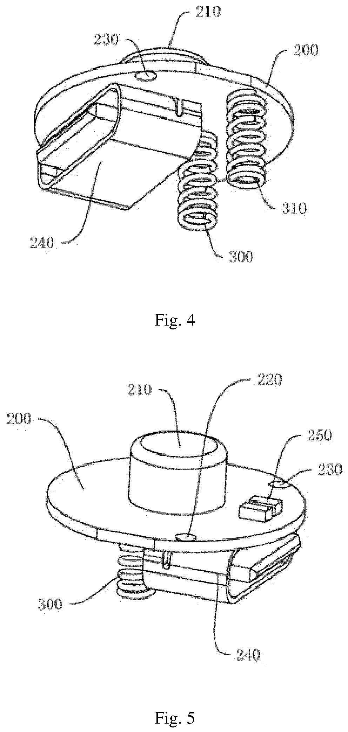

Referring to Fig. 1 to Fig. 5, an embodiment of the present disclosure provides a cylindrical lithium-ion battery. The cylindrical lithium-ion battery comprises a battery cell 100, a protection board 200, a first elastic conductive member 300, a second elastic conductive member 310 and a fixing cap 500. The protection board 200 is installed above the battery cell 100 at intervals, a top surface of the protection board 200 is provided with a metal contact 210 protruding upwards. An upper end of the first elastic conductive member 300 abuts against a bottom surface of the protection board 200 and is electrically connected to a positive electrode of the protection board 200, and a lower end of the first elastic conductive member 300 abuts against a top end of the battery cell 100 and is electrically connected to a positive electrode of the battery cell 100. An upper end of the second elastic conductive member 310 abuts against the bottom surface of the protection board 200 and is electrically connected to a negative electrode of the protection board 200, and a lower end of the second elastic conductive member 310 abuts against a top surface of the battery cell 100 and is electrically connected to a negative electrode of the battery cell 100. The fixing cap 500 is sleeved on a periphery of the battery cell 100, and an inner top wall of the fixing cap 500 abuts against the top surface of the protection board 200 and is located on a periphery of the metal contact 210.

In the above structure, by using the first elastic conductive member 300 and the second elastic conductive member 310, one end of each of the first elastic conductive member 300 and the second elastic conductive member 310 abuts against the bottom surface of the protection board 200, and the other end abuts against the top surface of the battery cell 100, so that the upper end of the first elastic conductive member 300 is electrically connected to the positive electrode of the protection board 200, the lower end of the first elastic conductive member 300 is electrically connected to the positive electrode of the battery cell 100, the upper end of the second elastic conductive member 310 is electrically connected to the negative electrode of the protection board 200, the lower end of the second elastic conductive member 310 is electrically connected to the negative electrode of the battery cell 100, and then the fixing cap 500 is sleeved, so that the inner top wall of the fixing cap 500 abuts against the top surface of the protection board 200, thereby completing the assembly of the cylindrical lithium-ion battery. The entire process eliminates the traditional connection structure of nickel tabs and nickel strips, reducing the need for multiple manual spot welding processes, thereby simplifying the battery assembly process and making it more convenient.

It can be understood that in the above structure, the protection board 200 and the battery cell 100 are connected by means of the first elastic conductive member 300 and the second elastic conductive member 310, and the first elastic conductive member 300 and the second elastic conductive member 310 can also support the protection board 200, so that the protection board 200 and the top surface of the battery cell 100 are arranged at intervals, thereby preventing direct contact between the protection board 200 and the top surface of the battery cell 100.

It can be understood that, referring to Fig. 1 to Fig. 5, in some embodiments, the first elastic conductive member 300 is located in the middle of the battery cell 100, and the second elastic conductive member 310 is disposed close to the edge of the battery cell 100, so that the first elastic conductive member 300 can be electrically connected to the positive electrode of the battery cell 100, and the second elastic conductive member 310 is electrically connected to the negative electrode of the battery cell 100.

It can be understood that a top surface of the protection board 200 is provided with a metal contact 210 protruding upwards, and the metal contact 210 is used for positive electrode output of the cylindrical lithium-ion battery.

Referring to Fig. 1 to Fig. 5, in some embodiments, both the first elastic conductive member 300 and the second elastic conductive member 310 are compression springs.

In the above structure, the first elastic conductive member 300 and the second elastic conductive member 310 are both arranged as compression springs, so that materials are convenient to obtain, and the product cost is reduced. In addition, the protection board 200 and the battery cell 100 are connected by means of the two compression springs, and the protection board 200 can also be supported, so that the protection board 200 and the top surface of the battery cell 100 are arranged at intervals, thereby preventing direct contact between the protection board 200 and the top surface of the battery cell 100.

It is understandable that the first elastic conductive member 300 and the second elastic conductive member 310 can be configured not only as compression springs but also as elastic pins, such as POGO PIN elastic pins. Of course, other elastic conductive structures may also be employed for the first elastic conductive member 300 and the second elastic conductive member 310, and the present disclosure does not specifically limit their forms.

In some embodiments, the upper end of the first elastic conductive member 300 and the upper end of the second elastic conductive member 310 are both attached to the bottom surface of the protection board 200.

In the above structure, the upper end of the first elastic conductive member 300 and the upper end of the second elastic conductive member 310 are both attached to the bottom surface of the protection board 200, so that the connection between the first elastic conductive member 300, the second elastic conductive member 310 and the protection board 200 is firmer. In addition, during assembly, the protection board 200, the first elastic conductive member 300 and the second elastic conductive member 310 can be directly installed above the battery cell 100, and the protection board 200, the first elastic conductive member 300 and the second elastic conductive member 310 do not need to be respectively installed, so that the assembly time can be greatly saved, the assembly efficiency is improved, and the assembly is more convenient and simpler.

It can be understood that the upper end of the first elastic conductive member 300 and the upper end of the second elastic conductive member 310 are both attached to the bottom surface of the protection board 200. Specifically, the upper end of the first elastic conductive member 300 and the upper end of the second elastic conductive member 310 may be attached to the bottom surface of the protection board 200 using Surface Mount Technology (SMT) chip attachment process.

Referring to Fig. 1 to Fig. 5, in some embodiments, a first insulating support 400 is arranged between the protection board 200 and the battery cell 100.

In the above structure, by means of the arrangement of the first insulating support 400, the protection board 200 can be further separated from the battery cell 100, and the protection board 200 can be supported and fixed more stably, so that the risk of mutual contact between the protection board 200 and the top surface of the battery cell 100 can be further reduced, and the internal structure of the cylindrical lithium-ion battery is more stable and compact.

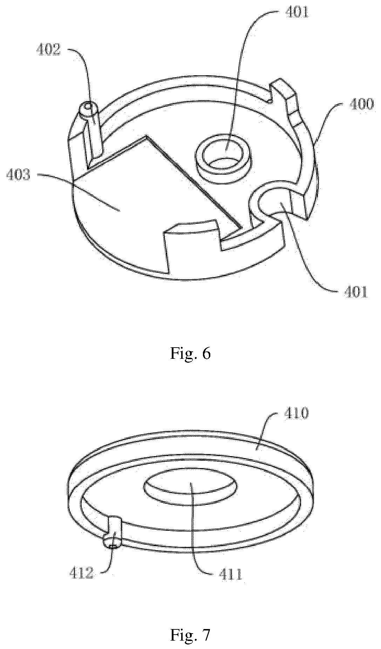

Referring to Fig. 1 to Fig. 6, in some embodiments, the first insulating support 400 is provided with two first clearance grooves 401, the first elastic conductive member 300 penetrates through one of the first clearance grooves 401, and the second elastic conductive member 310 penetrates through another first clearance groove 401.

In the above structure, two first clearance grooves 401 are formed in the first insulating support 400, so that the first elastic conductive member 300 and the second elastic conductive member 310 can be in position, the lower end of the first elastic conductive member 300 can penetrate through one of the first clearance grooves 401 and abut against the top surface of the battery cell 100, and the lower end of the second elastic conductive member 310 can penetrate through the other first clearance groove 401 and abut against the top surface of the battery cell 100.

It can be understood that, referring to Fig. 1 to Fig. 6, one of the first clearance grooves 401 through which the first elastic conductive member 300 passes is a closed groove with a closed periphery, and the other first clearance groove 401 through which the second elastic conductive member 310 passes is an open groove with a notch in the edge. Of course, this is merely an example description of Fig. 1 to Fig. 6, and the first clearance groove 401 may be an open groove having a notch, or may be an edge-sealed closed groove. The present disclosure is not specifically limited.

It can be understood that the first insulating support 400 is provided with two first clearance grooves 401, which are merely one example description of Fig. 1 to Fig. 6. In some embodiments, the first insulating support 400 may also not be provided with the first clearance groove 401, the first elastic conductive member 300, the second elastic conductive member 310 and the first insulating support 400 are directly arranged side by side, so that the first elastic conductive member 300 and the second elastic conductive member 310 are located on one side of the first insulating support 400.

Referring to Fig. 1 to Fig. 6, in some embodiments, the first insulating support 400 is provided with a first positioning column 402 extending upwards, the protection board 200 is provided with a first positioning hole corresponding to the first positioning column 402, and the first positioning column 402 is inserted into the first positioning hole.

In the above structure, by arranging the first positioning column 402 and the first positioning hole which are mutually inserted, mounting and positioning between the protection board 200 and the first insulating support 400 can be facilitated, and then the assembly between the protection board 200 and the first insulating support 400 is simpler and more convenient.

It can be understood that in order to facilitate mounting and positioning between the protection board 200 and the first insulating support 400, the first positioning column 402 can be arranged on the first insulating support 400, and the first positioning hole is formed in the protection board 200. Alternatively, the first positioning column 402 can also be arranged on the protection board 200, so that the first positioning column 402 extends downwards, and the first positioning hole is formed in the first insulating support 400. The present disclosure is not specifically limited.

Referring to Fig. 1 to Fig. 7, in some embodiments, a second insulating support 410 is arranged between the protection board 200 and the fixing cap 500, the inner top wall of the fixing cap 500 abuts against the top surface of the protection board 200 via the second insulating support 410, the second insulating support 410 is provided with a second clearance groove 411, and the metal contact 210 penetrates through the second clearance groove 411.

In the above structure, with the arrangement of the second insulating support 410, the protection board 200 is further insulated and protected, and is fixed in place by being matched with the first insulating support 400. The second clearance groove 411 is formed in the second insulating support 410, so that the metal contact 210 can be accommodated, allowing the metal contact 210 to extend out of the outer side of the cylindrical lithium-ion battery to discharge to external elements through the metal contact 210. Meanwhile, the assembly between the second insulating support 410 and the protection board 200 can be positioned, thereby avoiding any deviation between the second insulating support 410 and the protection board 200.

Referring to Fig. 1 to Fig. 7, in some embodiments, the second insulating support 410 is provided with a second positioning column 412 extending downwards, the protection board 200 is provided with a second positioning hole corresponding to the second positioning column 412, and the second positioning column 412 is inserted into the second positioning hole.

In the above structure, by arranging the second positioning column 412 and the second positioning hole which are mutually inserted, mounting and positioning between the protection board 200 and the second insulating support 410 can be further facilitated, and then the assembly between the protection board 200 and the second insulating support 410 is simpler and more convenient.

It can be understood that in order to facilitate mounting and positioning between the protection board 200 and the second insulating support 410, the second positioning column 412 can be arranged on the second insulating support 410, and the second positioning hole is formed in the protection board 200. Alternatively, the second positioning column 412 can also be arranged on the protection board 200, so that the second positioning column 412 extends upwards, and the second positioning hole is formed in the second insulating support 410. The present disclosure is not specifically limited.

Referring to Fig. 1 to Fig. 5, in some embodiments, an upper end of the battery cell 100 is inserted into the fixing cap 500 and is in interference fit with the fixing cap 500.

In the above structure, the battery cell 100 and the fixing cap 500 are interference-fitted, so that the connection between the battery cell 100 and the fixing cap 500 is made tighter and more stable, not prone to scattering. Meanwhile, due to the inner top wall of the fixing cap 500 abutting against the protection board 200 downwards, the protection board 200, the first elastic conductive member 300, and the second elastic conductive member 310 are stably installed within the fixing cap 500. As a result, the structure of the cylindrical lithium-ion battery becomes more compact and stable.

It can be understood that, in order to achieve a stable connection between the battery cell 100 and the fixing cap 500, apart from the interference fit being applied between the battery cell 100 and the fixing cap 500, connection methods such as welding connection and buckle connection can also be employed between the battery cell 100 and the fixing cap 500. This is not specifically limited in the present disclosure.

It can be understood that the fixing cap 500 can specifically be a steel cap or other metal caps, and it is also possible for the fixing cap 500 to be made of other materials, which is not specifically limited in the present disclosure.

Referring to Fig. 1 to Fig. 5, in some embodiments, the cylindrical lithium-ion battery further comprises an outer film 600, the outer film 600 covers a periphery of the battery cell 100 and the fixing cap 500, the outer film 600 is provided with an annular top wall 610 and an annular bottom wall 620, the annular top wall 610 is attached to an outer top wall of the fixing cap 500, and the annular bottom wall 620 is attached to a bottom wall of the battery cell 100.

In the above structure, with the outer film 600 covering the periphery of the battery cell 100 and the fixing cap 500, the connection stability between the battery cell 100 and the fixing cap 500 can be further enhanced. The arrangement of the annular top wall 610 of the outer film 600 allows for the metal contact 210 to be positioned, and the annular bottom wall 620 of the outer film 600 allows for the negative electrode on the bottom surface of the battery cell 100 to be positioned, thus enabling the cylindrical lithium-ion battery to discharge to external elements. In addition, the outer film 600 can also be used for printing trademarks, parameters, etc., serving as an identification for the cylindrical lithium-ion battery.

It can be understood that the outer film 600 can specifically adopt a Polyvinyl Chloride (PVC) thermal shrinkage film or an adhesive sticker label, so that the battery cell 100 and the fixing cap 500 can be more tightly coated by the outer film 600. Certainly, besides, the outer film 600 can also be made of other film materials, which is not specifically limited in the present disclosure.

Referring to Fig. 1 to Fig. 5, the cylindrical lithium-ion battery further comprises a charging interface 240, the charging interface 240 is installed on the protection board 200 and is electrically connected to the protection board 200, and a side wall of the fixing cap 500 is provided with a clearance hole 510 for allowing the charging interface 240 to be in position.

In the above structure, the charging interface 240 is used for charging the battery cell 100, and by forming the clearance hole 510 in the side wall of the fixing cap 500, the external power supply can be conveniently connected to the charging interface 240. During charging, with the external power supply connected to the charging interface 240, the current from the external power supply can flow into the battery cell 100 through the protection board 200 to charge the battery cell 100.

It can be understood that the charging interface 240 is installed on the protection board 200 and is electrically connected to the protection board 200, and specifically, the charging interface 240 may be attached to the protection board 200 using SMT chip attachment process.

It can be understood that, in some embodiments, the charging interface 240 is a 5V charging port, the protection board 200 is further provided with a charging management circuit, the charging interface 240 is electrically connected to the charging management circuit, and during charging, the 5V input power supply drops to 4.2 V through the charging management circuit, and then flows into the battery cell 100 through the protection board 200, thereby realizing charging of the battery cell 100.

It can be understood that in order to facilitate the assembly and placement of the charging interface 240, the upper surface of the protection board 200 is provided with a placement groove 403 for carrying and positioning the charging interface 240, and the placement groove 403 can prevent dislocation between the charging interface 240 and the first insulating support 400.

Referring to Fig. 1 to Fig. 5, in some embodiments, a charging indicator light 250 electrically connected to the charging interface 240 is installed on the protection board 200.

In the above structure, by arranging the charging indicator light 250, when the external power supply is connected to the charging interface 240, the charging indicator light 250 can be lit, and when the external power supply is disconnected from the charging interface 240, the charging indicator light 250 is extinguished, thereby facilitating user operation and indicating whether the cylindrical lithium-ion battery is charging.

It can be understood that, in some embodiments, a charging indicator light 250 electrically connected to the charging interface 240 is installed on the protection board 200. When the external power supply is connected to the charging interface 240, the charging indicator light 250 can be lit up red. And when the external power supply is disconnected from the charging interface 240, the charging indicator light 250 changes to a green light or an extinguished state, thereby facilitating user operation and reminding the user whether the cylindrical lithium ion battery is in a full or charging state.

The embodiments of the present disclosure are described in detail above with reference to the accompanying drawings. However, the present disclosure is not limited to the above-mentioned embodiments, and various changes can also be made without departing from the spirit of the present disclosure by a person of ordinary skill in the pertinent technical field.

## Claims

1. A cylindrical lithium-ion battery, comprising:
a battery cell (100);
a protection board (200), wherein the protection board (200) is installed above the battery cell (100) at intervals, a top surface of the protection board (200) is provided with a metal contact (210) protruding upwards;
a first elastic conductive member (300), wherein an upper end of the first elastic conductive member (300) abuts against a bottom surface of the protection board (200) and is electrically connected to a positive electrode of the protection board (200), and a lower end of the first elastic conductive member (300) abuts against a top end of the battery cell (100) and is electrically connected to a positive electrode of the battery cell (100);
a second elastic conductive member (310), wherein an upper end of the second elastic conductive member (310) abuts against the bottom surface of the protection board (200) and is electrically connected to a negative electrode of the protection board (200), and a lower end of the second elastic conductive member (310) abuts against a top surface of the battery cell (100) and is electrically connected to a negative electrode of the battery cell (100); and
a fixing cap (500), wherein the fixing cap (500) is sleeved on a periphery of the battery cell (100), an inner top wall of the fixing cap (500) abuts against the top surface of the protection board (200) and is located on a periphery of the metal contact (210).

2. The cylindrical lithium-ion battery according to claim 1, wherein the upper end of the first elastic conductive member (300) and the upper end of the second elastic conductive member (310) are both attached to the bottom surface of the protection board (200).

3. The cylindrical lithium-ion battery according to claim 1, wherein the first elastic conductive member (300) and the second elastic conductive member (310) are both compression springs.

4. The cylindrical lithium-ion battery according to claim 1, wherein a first insulating support (400) is arranged between the protection board (200) and the battery cell (100).

5. The cylindrical lithium-ion battery according to claim 4, wherein the first insulating support (400) is provided with two first clearance grooves (401), the first elastic conductive member (300) penetrates through one of the first clearance grooves (401), and the second elastic conductive member (310) penetrates through another first clearance groove (401).

6. The cylindrical lithium-ion battery according to claim 1, wherein a second insulating support (410) is arranged between the protection board (200) and the fixing cap (500), the inner top wall of the fixing cap (500) abuts against the top surface of the protection board (200) via the second insulating support (410), the second insulating support (410) is provided with a second clearance groove (411), and the metal contact (210) penetrates through the second clearance groove (411).

7. The cylindrical lithium-ion battery according to claim 1, wherein an upper end of the battery cell (100) is inserted into the fixing cap (500) and is in interference fit with the fixing cap (500).

8. The cylindrical lithium-ion battery according to claim 1, further comprising an outer film (600), the outer film (600) covers a periphery of the battery cell (100) and the fixing cap (500), the outer film (600) is provided with an annular top wall (610) and an annular bottom wall (620), the annular top wall (610) is attached to an outer top wall of the fixing cap (500), and the annular bottom wall (620) is attached to a bottom wall of the battery cell (100).

9. The cylindrical lithium-ion battery according to claim 1, further comprising a charging interface (240), the charging interface (240) is installed on the protection board (200) and is electrically connected to the protection board (200), and a side wall of the fixing cap (500) is provided with a clearance hole (510) for allowing the charging interface (240) to be in position.

10. The cylindrical lithium-ion battery according to claim 9, wherein a charging indicator light (250) electrically connected to the charging interface (240) is installed on the protection board (200).
